# EUROPÄISCHE PATENTANMELDUNG

(11) **EP 1 541 605 A2**
(43) Veröffentlichungstag der Anmeldung: **15.06.2005**
(21) Anmeldenummer: 04023469.2
(22) Anmeldetag: 01.10.2004
(51) Int. Cl.: C08G 18/36, C08K 5/00, C08L 75/04

(54) **Platten und Formkörper auf Basis von Polyurethanbindemitteln**

(30) Priorität: 05.12.2003 DE 10356767
(71) Anmelder: Henkel Kommanditgesellschaft auf Aktien, 40589 Düsseldorf (DE)
(72) Erfinder: Thiele, Lothar, 40764 Langenfeld (DE); Kohlstadt, Hans-Peter, 42549 Velbert (DE); Poel, André, 47877 Willich (DE)

(57) **Zusammenfassung**

Formkörper auf der Basis von Polyurethanbindemitteln aus mindestens einem Polyisocyanat, Polyolen, langkettigen Fettsäuren, gegebenenfalls Wasser und Aminen mit Füllstoffen weisen eine hohe Biegeelastizität auf, wenn die Füllstoffe einen mittleren Teilchendurchmesser bis zu 2,5 mm aufweisen und die Teilchengeometrie der Füllstoffe runde, ovale oder völlig unregelmäßige Strukturen aufweist. Dabei werden die Bindemittelzusammensetzung und die Füllstoffe bei einem Druck zwischen 1 MPa und 40 MPa bei Temperaturen von 60 bis 180°C für 1 bis 30 min. zur Reaktion gebracht und danach wird der Druck in der formgebenden Vorrichtung entspannt. Die so hergestellten Formkörper eignen sich zur Herstellung von Platten oder Halbzeugen für die Beschichtung von Möbeln, Küchenarbeitsplatten, Böden, Wänden, Treppen oder Decken.

## Beschreibung

Die vorliegende Erfindung betrifft ein Verfahren zum Herstellen von elastischen Formkörpern auf der Basis von Polyurethanbindemitteln sowie die Verwendung dieser Formkörper.

Die Herstellung von Platten und Formkörpern aus kompakten oder schäumenden Bindemitteln oder Füllstoffen ist bekannt. So lassen sich aus Marmormehl oder Granitmehl und Kunstharzen, beispielsweise auf der Basis von ungesättigten Polyestern, synthetische Marmor- oder Granitmaterialien herstellen. Dazu wird in der Regel das Kunstharzmaterial mit dem Marmormehl oder Granitmehl gemischt und in großen Formen homogenisiert und als Block ausgehärtet, der anschließend zu den entsprechenden Formkörpern wie Platten und anderen Halbzeugen zugeschnitten wird.

WO 02/094523 beschreibt einen Herstellprozess zur Herstellung von Paneelen, Fliesen und ähnlichen plattenförmigen Formkörpern aus Agglomeraten von Mineralien, wie z.B. Terrakotta, Granulat oder Marmormehl oder Granitmehl oder auch gemahlene Ziegelsteine durch Mischung dieser mineralischen Füllstoffe mit einem zweikomponentigen oder thermisch härtenden Harz. Anschließend soll diese Mischung auf eine plane Grundfläche mit Seitenwänden definierter Schichtdicke gegossen werden. Danach soll diese Schicht zwischen beheizte Platten einer Presse eingeführt werden, damit unter der Einwirkung von Hitze und Druck die Polymerisation des Harzes durchgeführt wird. Es soll eine gehärtete feuerbeständige, wasserbeständige und mechanischen Beanspruchungen widerstehende Platte entstehen, die für eine Vielzahl von Anwendungen geeignet ist. Als Anwendungen genannt werden Fußbodenbeläge, Treppen, Wandbeläge, Möbel, Küchen, Arbeitsplatten, Tische, Bänke und ähnliches. Über die zu verwendenden Bindemittel macht diese Schrift keinerlei Angaben.

WO 99/30882 beschreibt Formkörper, die im Wesentlichen aus Holzteilchen und/oder cellulosehaltigem Material und einem porösen Polyurethanbindemittel im Gewichtsverhältnis von 0,05 bis 1,0:1,0 des Bindemittels zu den Holzteilchen oder cellulosehaltigem Material bestehen. Es wird vorgeschlagen, diese Formkörper durch die Reaktion mindestens eines Polyisocyanates mit mindestens einem Polyol oder Polyamin und mit mindestens einer Carbonsäure als Treibmittel durchzuführen. Die Reaktion soll vorzugsweise bei Temperaturen zwischen 80 und 100°C und mit einem Anfangsdruck von mehr als 1 kp/cm² durchzuführen sein. Die Gasbildung und damit die Endeigenschaften der geschäumten Formkörper sollen weitgehend unabhängig vom Feuchtegehalt der Holzteilchen und/oder dem cellulosehaltigen Material sein. Dieses soll insbesondere für hohe Festigkeitswerte und Plastizität gelten.

US 2003/0090016 A1 beschreibt ein Bindemittel aus einem Sojaöl basierenden Polyol und einem Isocyanat, das mit Aggregaten gemischt wird. Dabei sollen über die Aggregatzusammensetzung unterschiedliche mechanische Eigenschaften erzielt werden. Als Aggregatmaterialien werden Mineralien, Keramik, Glas, Flugasche, Kalkstein, Sand, Kiesel, gemahlenes Felsgestein, Metallfasern und Mischungen dieser Füllstoffe genannt.

WO 98/58994 beschreibt ein Verfahren zur Herstellung von Platten oder Formteilen sowie plattenförmiges Halbzeug und Raumausstattungsgegenstände. Dazu soll einem Polyurethan-Schaumkunststoff Natur- und/oder Kunststeinmehl mit einer Teilchensiebgröße zwischen 1,0 und 250 µm beigemischt werden. Die Komponenten sollen in einer beheizbaren Form zum Aufschäumen gebracht werden, wobei die Temperatur zwischen 20°C und 80°C eingehalten wird und das Gemisch durch Aufschäumen in einer Form unter einem Druck zwischen 2 MPa und 13 MPa gehalten wird, bis eine Dichte zwischen 80 kg/m³ und 2000 kg/m³ erreicht wird. Als Füllmittel werden Quarzmehle, Steinschleifschlämme, fein gemahlenes Silikatglas und dergleichen vorgeschlagen. Weiterhin wird vorgeschlagen, daß in einem sogenannten In-mould-Verfahren, das in der beheizten Form aufgeschäumte Gemisch direkt mit einer Natursteinplatte, einer Metallplatte oder einem Holzwerkstoff verbunden wird. Nähere Angaben über das Bindemittelsystem macht diese Schrift nicht.

Angesichts dieses Standes der Technik haben sich die Erfinder die Aufgabe gestellt, ein Verfahren zur Herstellung von elastischen Formkörpern auf der Basis von Polyurethanbindemitteln bereit zu stellen, bei dem eine Vielzahl von feinteiligen, auch preiswerten Füllstoffen eingesetzt werden können und wobei der derartig hergestellte Formkörper eine ausreichende Elastizität aufweist um hohen Biegebelastungen zu widerstehen.

Die erfindungsgemäße Lösung der Aufgabe ist den Ansprüchen zu entnehmen.
Das erfindungsgemäße Verfahren besteht im Wesentlichen darin, daß die Bindemittel-Zusammensetzung auf Basis von Polyisocyanaten, Polyolen, langkettigen Fettsäuren sowie ggf. Wasser und Aminen mit Füllstoffen mit einem mittleren Teilchendurchmesser bis zu 2,5 mm durchmischt werden und diese Mischung dann mit einem Druck von 1 MPa bis 40 MPa und Temperaturen von 60°C bis 180°C für 1 bis 30 min. zur Reaktion gebracht werden und anschließend der Druck entspannt wird. Vorzugsweise wird ein Druck vom 5 MPa bis 30 MPa und ein Temperaturbereich von 80°C bis 120°C verwendet.

Dabei kann die Reaktion in geschlossenen Formen, in Formen mit beweglichem Stempel, in Plattenpressen mit oder ohne Form oder in Band- oder Doppelbandpressen durchgeführt werden. Bei letzteren erfolgt die Entspannung des Pressendruckes dadurch, daß der gebildete Formkörper den Druckbereich kontinuierlich verlässt. Bei der Durchführung des Verfahrens in geschlossenen Formen, in Formen mit beweglichem Stempel oder in Plattenpressen ist es zweckmäßig, daß nach dem Entspannungsschritt das Reaktionsprodukt gekühlt wird und erst nach Abkühlung der formgebenden Vorrichtung entnommen wird. In diesen Fällen kann es nötig sein, den ausreagierten Formkörper erst bei Temperaturen unterhalb von 40°C bis 80°C der formgebenden Vorrichtung zu entnehmen.

Als Füllstoffe eignen sich beispielsweise Gummimehl, Schaumstoffmehl, Holzmehl, zerkleinerte Nußschalen, insbesondere Kokosnußschalen, Metallpulver, zerkleinerte Kunststoffabfälle, zerkleinerte Muschelschalen, Sand, Kies, Steinmehl, Marmormehl, Glasmehl, Keramikmehl, Ziegelmehl oder Mischungen dieser Materialien, dabei hängt die Auswahl davon ab, welche Farbe und welche Struktur die so erzeugten Formkörper oder Plattenmaterialien haben sollen. Gegebenenfalls können als Füllstoffe auch Blähton, Blähglas, Blähkeramik, Keramik- oder Glashohlkugeln oder Mischungen dieser Materialien entweder alleine oder in Kombination mit den vorgenannten Füllstoffen eingesetzt werden.

Wesentlich zur Erzielung der elastischen Eigenschaften, der derartig hergestellten Formkörper ist die Geometrie der Teilchen. Die Teilchengeometrie der Füllstoffe sollte runde, ovale oder völlig unregelmäßige Strukturen aufweisen und insbesondere keine parallelen Flächen oder ebenen Flächen besitzen. Dies bedeutet, daß quaderförmige, würfelförmige, pyramidenförmige, oktaederförmige oder tetraederförmige Teilchen ungeeignet sind für die Herstellung der erfindungsgemäßen Formkörper. Vorzugsweise haben die Füllstoffteilchen ein geringes Länge/Breite oder Dicke Verhältnis ("aspect ratio") vom 0,5 bis 2. Der Füllstoff kann dabei einen sehr hohen Feinanteil von bis zu 50 Gew.-% mit einem mittleren Teilchendurchmesser von kleiner als 0,25 µm enthalten, insbesondere kann auch ein sehr hoher Staubanteil des Füllstoffes mit verwendet werden. Staub im Sinne dieser Erfindung sind dabei Füllstoffteilchen mit einem mittleren Teilchendurchmesser kleiner als 0,1 µm, hiervon können bis zu 20 Gew.-% in der Füllstoffmischung enthalten sein.

Es wurde jetzt gefunden, daß es für das erfindungsgemäße Verfahren wesentlich ist, daß das Bindemittelgemisch während der Reaktion Treibmittel enthält, dabei bewirken die Treibmittel eine mikroporöse Struktur. Der Einsatz schäumender Bindemittel ist zum einen wichtig für eine Gewichtsreduktion im Vergleich zu kompakten Bindemittelsystemen. Andererseits kann der Schäumdruck dazu ausgenutzt werden, die Durchdringung der zu bindenden Füllstoffbestandteile durch die Bindemittelkomponenten zu bewirken. Dabei kann eine chemische Reaktion zwischen den Teilchen der Füllstoffe und den Bindemittel erfolgen. Daraus resultiert ein sehr fester Verbund zwischen den Bindemitteln und den Teilchenpartikeln. Es wurde gefunden, daß auch beim Binden harter Füllstoffe mit schäumenden harten Polyurethanbindemitteln elastifizierte Formkörper herstellbar sind, vorausgesetzt, die Füllstoffteilchen haben die vorgenannte Teilchengeometrie und bei der Herstellung der Formkörper wird ein ausreichend hoher Druck angewendet. Die erforderlichen Drucke sollen zwischen 1 MPa und 40 MPa, vorzugsweise zwischen 5 MPa und 30 MPa liegen. Die Reaktionstemperaturen während der Aushärtung des Bindemittelsystems unter Druck sollen zwischen 60°C und 180°C liegen, geeignete Vorzugstemperaturen liegen zwischen 80°C und 160°C. Die Verweildauer richtet sich nach der Vorrichtung, in der die Reaktion unter Druck durchgeführt wird, sie liegt zwischen 1 und 30 min.

Das Verhältnis von Bindemittel (Summe aus Polyisocyanat, Polyol, Fettsäuren und ggf. weiterer Bindemittelbestandteile) zu Füllstoffen soll zwischen 0,5:9,5 bis 5:5 vorzugsweise zwischen 0,75:9,25 bis 2:8 liegen.

Die im Rahmen des erfindungsgemäßen Verfahrens verwendeten Polyurethan-Bindemittel bestehen im Wesentlichen aus einem Reaktionsprodukt mindestens eines Polyols mit mindestens einem Polyisocyanat, wobei zur Porenbildung des Schaums als Treibmittel eine Carbonsäure und gegebenenfalls Wasser mitverwendet werden können. Anstelle von Polyolen und Carbonsäuren können auch Hydroxycarbonsäuren oder Aminocarbonsäuren eingesetzt werden, Polyole können ganz oder teilweise durch Polyamine ersetzt werden.

Die Polyisocyanate sind mehrfunktionell, vorzugsweise enthalten die geeigneten mehrfunktionellen Isocyanate im Mittel 2 bis höchstens 5, vorzugsweise bis 4 und insbesondere 2 oder 3 Isocyanat-Gruppen pro Molekül. Die zu verwendenden Polyisocyanate können aromatische, cycloaliphatische oder aliphatische Isocyanate sein.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-diisocyanat, Diphenylmethan-4,4'-diisocyanat (MDI), Diphenylmethan-2,4'-diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyl-dimethylmethandiisocyanat, Di- und Tetraalkyl-diphenylmethandiisocyanat, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat (H₁₂MDI), 1-Isocyanatomethyl-3-isocyanato-1,5,5-trimethylcyclohexan (Isophoron-Diisocyanat, IPDI), Cyclohexan-1 ,4-diisocyanat, hydriertes Xylylen-diisocyanat (H₆XDI), 1 -Methyl-2,4-diisocyanato-cyclohexan, m- oder p-Tetramethylxylendiisocyanat (m-TMXDI, p-TMXDI) und Dimerfettsäure-diisocyanat. Beispiele für aliphatische Polyisocyanate sind Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, Butan-1,4-diisocyanat sowie 1,12-Dodecandiisocyanat (C₁₂DI).

Im allgemeinen werden aromatische Isocyanate bevorzugt, vorzugsweise das Diphenylmethandiisocyanat, entweder in Form der reinen Isomeren, als Isomerengemische der 2,4'-/4,4'-Isomeren oder auch das mit Carbodiimid verflüssigte MDI, das z.B. unter dem Handelsnamen Isonate 143 L bekannt ist, sowie das sogenannte "Roh-MDI", d.h. eine Isomeren/Oligomerenmischung des MDI, wie sie z.B. unter dem Handelsnamen PAPI bzw. Desmodur VK im Handel erhältlich sind. Weiterhin können sogenannte "quasi-Prepolymere", d.h. Umsetzungsprodukte des MDI bzw. des TDI mit niedermolekularen Diolen, wie z.B. Ethylenglykol, Diethylenglykol, Propylenglykol, Dipropylenglykol oder Triethylenglykol verwendet werden. Diese quasi Prepolymeren stellen bekanntlich eine Mischung der vorgenannten Umsetzungsprodukte mit monomeren Diisocyanaten dar. Erstaunlicherweise vermögen auch aliphatische und cycloaliphatische Isocyanate schon bei niedrigen Temperaturen schnell und vollständig zu den erfindungsgemäßen Schaumstoffen zu reagieren. Neben den vorgenannten aliphatischen und cycloaliphatischen Isocyanaten sind auch deren Isocyanuratisierungsprodukte bzw. Biuretisierungsprodukte, insbesondere die des HDI bzw. IPDI einzusetzen.

Prinzipiell sind alle Polyole, die bereits zur Polyurethanherstellung bekannt sind, auch für die vorliegende Erfindung geeignet. In Betracht kommen insbesondere die an sich bekannten Polyhydroxy-Polyether des Molekulargewichtsbereiches von 60 bis 10.000, vorzugsweise 70 bis 6.000, mit 2 bis 10 Hydroxylgruppen pro Molekül. Derartige Polyhydroxypolyether werden in an sich bekannter Weise durch Alkoxylierung von geeigneten Startermolekülen erhalten, z. B. von Wasser, Propylenglykol, Glycerin, Trimethylolpropan, Sorbit, Rohrzucker usw. Geeignete Alkoxylierungsmittel sind insbesondere Propylenoxid und eventuell auch Ethylenoxid.

Vorzugsweise eignen sich die flüssigen Polyhydroxyverbindungen mit zwei bzw. drei Hydroxylgruppen pro Molekül, wie z.B. di- und/oder trifunktionelle Polypropylenglykole im Molekulargewichtsbereich von 200 bis 6000, vorzugsweise im Bereich von 400 bis 3000. Es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole, die z.B. durch die saure Polymerisation von Tetrahydrofuran hergestellt werden, dabei liegt der Molekulargewichtsbereich der Polytetramethylenglykole zwischen 200 und 6000, vorzugsweise im Bereich von 400 bis 4000.

Weiterhin sind als Polyole die flüssigen Polyester geeignet, die durch Kondensation von Di- bzw. Tricarbonsäuren, wie z.B. Adipinsäure, Sebacinsäure, Glutarsäure, Azelainsäure, Hexahydrophthalsäure oder Phthalsäure mit niedermolekularen Diolen bzw. Triolen wie z.B. Ethylenglykol, Propylenglykol, Diethylenglycol, Triethylenglycol, Dipropylenglycol, 1,4-Butandiol, 1,6-Hexandiol, 1,10-Decandiol, Glyzerin oder Trimethylolpropan hergestellt werden können.

Eine weitere Gruppe der erfindungsgemäß einzusetzenden Polyole sind die Polyester auf der Basis von ε-Caprolacton, auch "Polycaprolactone" genannt.

Es können aber auch Polyesterpolyole oleochemischer Herkunft verwendet werden. Derartige Polyesterpolyole können beispielsweise durch vollständige Ringöffnung von epoxidierten Triglyzeriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglyzerid-Derivate zu Alkylesterpolyolen mit 1 bis 12 C-Atomen im Alkylrest hergestellt werden. Weitere geeignete Polyole sind Polycarbonatpolyole und Dimerdiole (Fa. Henkel) sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.

Insbesondere ist die Polyol-Komponente eine Diol/Triol-Mischung aus Polyether- und Polyesterpolyolen.

Die erfindungsgemäß einzusetzenden Carbonsäuren reagieren mit den Isocyanaten in Gegenwart von Katalysatoren unter Abspaltung von Kohlendioxid zu Amiden, sie haben also die Doppelfunktion an dem Aufbau des Polymergerüstes beteiligt zu sein und gleichzeitig durch die Abspaltung des Kohlendioxids als Treibmittel zu wirken.

Unter "Carbonsäuren" werden Säuren verstanden, die eine oder mehrere - vorzugsweise bis zu drei - Carboxyl-Gruppen (-COOH) und mindestens 2, vorzugsweise 5 bis 400 C-Atome enthalten. Die Carboxyl-Gruppen können mit gesättigten oder ungesättigten, linearen oder verzweigten Alkyl- oder Cycloalkyl-Resten oder mit aromatischen Resten verbunden sein. Sie können weitere Gruppen wie Ether-, Ester-, Halogen-, Amid-, Amino-, Hydroxy- und Harnstoffgruppen enthalten. Bevorzugt werden jedoch Carbonsäuren, die als Flüssigkeiten bei Raumtemperatur leicht einarbeitbar sind, wie native Fettsäuren oder Fettsäuregemische, COOH-terminierte Polyester, Polyether oder Polyamide, Dimerfettsäuren und Trimerfettsäuren. Konkrete Beispiele für die Carbonsäuren sind: Essigsäure, Valerian-, Capron-, Capryl-, Caprin-, Laurin-, Myristin-, Palmitin-, Stearin-, Isostearin-, Isopalmitin-, Arachin-, Behen-, Cerotin- und Melissin-Säuren sowie die ein- oder mehrfach ungesättigte Säuren Palmitolein-, Öl-, Elaidin-, Petroselin-, Eruca-, Linol-, Linolen- und Gadoleinsäure. Außerdem seien auch noch genannt: Adipinsäure, Sebacinsäure, Isophthalsäure, Terephthalsäure, Trimellitsäure, Phthalsäure, Hexahydrophthalsäure, Tetrachlorphthalsäure, Oxalsäure, Mukonsäure, Bernsteinsäure, Fumarsäure, Ricinolsäure, 12-Hydroxy-stearinsäure, Zitronensäure, Weinsäure, di- oder trimerisierte ungesättigte Fettsäuren, gegebenenfalls in Mischung mit monomeren ungesättigten Fettsäuren und gegebenenfalls Partialester dieser Verbindungen. Ebenso können auch Ester von Polycarbonsäuren oder Carbonsäuregemischen, die sowohl COOH- als auch OH-Gruppen besitzen, eingesetzt werden wie Ester von TMP [C₂H₅-C(CH₂OH)₃], Glycerin, Pentaerythrit, Sorbit, Glykol bzw. deren Alkoxylate mit Adipinsäure, Sebacinsäure, Zitronensäure, Weinsäure oder gepfropfte oder partiell veresterte Kohlenhydrate (Zucker, Stärke, Cellulose) und Ringöffnungsprodukte von Epoxiden mit Polycarbonsäuren.

Zu den "Carbonsäuren" zählen neben den Aminocarbonsäuren bevorzugt "Hydroxycarbonsäuren". Unter "Hydroxycarbonsäuren" sind Monohydroxymonocarbonsäuren, Monohydroxypolycarbonsäuren, Polyhydroxymonocarbonsäuren und Polyhydroxypolycarbonsäuren einschließlich der entsprechenden Hydroxyalkoxycarbonsäuren mit 2 bis 600, vorzugsweise mit 8 bis 400 und insbesondere mit 14 bis 120 C-Atomen zu verstehen, die 1 bis 9, vorzugsweise 2 bis 3, Hydroxylgruppen bzw. Carboxylgruppen an einem H-C-Rest, insbesondere an einem aliphatischen Rest enthalten. Die Polyhydroxymonocarbonsäuren und die Polyhydroxypolycarbonsäuren einschließlich der entsprechenden Hydroxyalkoxycarbonsäuren werden zu den Polyhydroxyfettsäuren zusammengefaßt. Die vorzugsweise verwendeten Dihydroxyfettsäuren sowie ihre Herstellung werden in der DE-A- 33 18 596 und der EP 237 959 beschrieben, auf die ausdrücklich Bezug genommen wird.

Die erfindungsgemäß verwendeten Polyhydroxyfettsäuren leiten sich bevorzugt von natürlich vorkommenden Fettsäuren ab. Sie weisen daher in der Regel eine gerade Anzahl an Kohlenstoffatomen in der Hauptkette auf und sind nicht verzweigt. Besonders geeignet sind solche mit einer Kettenlänge von 8 bis 100, insbesondere von 14 bis 22 C-Atomen. Für technische Verwendungen werden natürliche Fettsäuren meistens als technische Mischungen eingesetzt. Diese Mischungen enthalten vorzugsweise einen Teil an Ölsäure. Sie können darüber hinaus weitere gesättigte, einfach ungesättigte und mehrfach ungesättigte Fettsäuren enthalten. Auch bei der Herstellung der erfindungsgemäß verwendbaren Polyhydroxyfettsäuren bzw. Polyhydroxyalkoxyfettsäuren können prinzipiell Mischungen unterschiedlicher Kettenlänge eingesetzt werden, die auch noch gesättigte Anteile oder aber Polyhydroxyalkoxycarbonsäuren mit Doppelbindungen enthalten können. Geeignet sind hier also nicht nur die reinen Polyhydroxyfettsäuren, sondern auch Mischprodukte, erhalten aus tierischen Fetten oder pflanzlichen Ölen, die nach Aufbereitung (Esterspaltung, Reinigungsstufen) Gehalte an einfach ungesättigten Fettsäuren > 40 %, bevorzugt > 60 %, aufweisen. Beispiele hierfür sind käuflich erhältliche, natürliche Rohstoffe wie z.B. Rindertalg mit einer Kettenverteilung von 67 % Ölsäure, 2 % Stearinsäure, 1 % Heptadecansäure, 10 % gesättigte Säuren der Kettenlänge C₁₂ bis C₁₆, 12 % Linolsäure und 2 % gesättigte Säuren >C₁₈ Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure. Diese Produkte können nach Ringöffnung kurz destilliert werden, um die ungesättigten Fettsäureesteranteile zu reduzieren. Weiterführende Reinigungsschritte (z.B. länger anhaltende Destillation) sind ebenfalls möglich.

Bevorzugt leiten sich die erfindungsgemäß verwendeten Polyhydroxyfettsäuren von einfach ungesättigten Fettsäuren ab, z.B. von 4,5-Tetradecensäure, 9,10-Tetradecensäure, 9,10-Pentadecensäure, 9,10-Hexadecensäure, 9,10-Heptadecensäure, 6,7-Octadecensäure, 9,10-Octadecensäure, 11,12-Octadecensäure, 11,12-Eicosensäure, 11,12-Docosensäure, 13,14-Docosensäure, 15,16-Tetracosensäure und 9,10-Ximensäure. Davon bevorzugt ist die Ölsäure (9,10-Octadecensäure). Sowohl cisals auch trans-Isomere von allen genannten Fettsäuren sind geeignet.

Geeignet sind auch Polyhydroxyfettsäuren, die sich von weniger häufig vorkommenden ungesättigten Fettsäuren herleiten, wie Decyl-12-ensäure, Stilingsäure, Dodecyl-9-ensäure, Rizinolsäure, Petroselinsäure, Vaccensäure, Eläostearinsäure, Punicinsäure, Licansäure, Parinarsäure, Gadoleinsäure, Arachidonsäure, 5-Eicosensäure, 5-Docosensäure, Cetoleinsäure, 5,13-Docosadiensäure und/oder Selacholeinsäure.

Des weiteren sind geeignet Polyhydroxyfettsäuren, die aus Isomerisierungsprodukten natürlicher ungesättigter Fettsäuren hergestellt worden sind. Die so hergestellten Polyhydroxyfettsäuren unterscheiden sich nur durch die Lage der Hydroxy- bzw. der Hydroxyalkoxygruppen im Molekül. Sie liegen im allgemeinen als Gemische vor. Natürlich vorkommende Fettsäuren sind im Sinne natürlicher Rohstoffe bei der vorliegenden Erfindung als Ausgangskomponente zwar bevorzugt, was aber nicht heißt, daß nicht auch synthetisch hergestellte Carbonsäuren mit entsprechenden C-Zahlen geeignet sind.

Ein Hydroxyalkoxyrest der Polyhydroxyfettsäuren leitet sich von dem Polyol ab, das zur Ringöffnung des epoxidierten Fettsäurederivats verwendet worden ist. Bevorzugt werden Polyhydroxyfettsäuren, deren Hydroxyalkoxygruppe sich von vorzugsweise primären difunktionellen Alkoholen mit bis zu 24, insbesondere bis zu 12 C-Atomen ableitet. Geeignete Diole sind Propandiol, Butandiol, Pentandiol und Hexandiol, Dodecandiol, vorzugsweise 1,2-Ethandiol, 1,4-Butandiol, 1,6-Hexandiol, Polypropylenglykol, Polybutandiol und/oder Polyethylenglykol mit einem Polymerisationsgrad von 2 bis 40. Des weiteren sind als Diol-Verbindungen Polypropylenglykol und/oder Polytetrahydrofurandiol sowie deren Mischpolymerisationsprodukte besonders geeignet. Dies gilt insbesondere dann, wenn diese Verbindungen jeweils einen Polymerisationsgrad von etwa 2 bis 20 Einheiten aufweisen. Zur Ringöffnung können aber auch Triole oder noch höherwertige Alkohole eingesetzt werden, z.B. Glycerin und Trimethylolpropan sowie deren Addukte von Ethylenoxid und/oder Propylenoxid mit Molekulargewichten bis zu 1 500. Es werden dann Polyhydroxyfettsäuren erhalten mit mehr als 2 Hydroxylgruppen pro Molekül.

Zur Ringöffnung kann anstelle eines Polyols als hydroxylgruppenhaltige Verbindung auch eine Hydroxycarbonsäure eingesetzt werden, z.B. Zitronensäure, Rizinolsäure, 12-Hydroxystearinsäure, Milchsäure. Es entstehen dann Ester-Gruppen anstelle von Ether-Gruppen. Des weiteren können auch Amine, Hydroxylgruppen-tragende Amine bzw. Amincarbonsäuren zur Ringöffnung eingesetzt werden.

Bevorzugt werden jedoch Dihydroxyfettsäuren, insbesondere aus Diolen eingesetzt. Sie sind bei Raumtemperatur flüssig und lassen sich leicht mit den übrigen Reaktionsteilnehmern mischen. Unter Dihydroxyfettsäuren werden im Sinne der Erfindung sowohl die Ringöffnungsprodukte epoxidierter ungesättigter Fettsäuren mit Wasser als auch die entsprechenden Ringöffnungsprodukte mit Diolen und deren Vernetzungsprodukten mit weiteren Epoxidmolekülen verstanden. Die Ringöffnungsprodukte mit Diolen können etwas genauer auch als Dihydroxyalkoxyfettsäuren bezeichnet werden. Dabei sind vorzugsweise die Hydroxygruppen bzw. die Hydroxyalkoxygruppe durch mindestens 1, vorzugsweise mindestens 3, insbesondere mindestens 6, CH₂-Einheiten von der Carboxygruppe getrennt.

Bevorzugte Dihydroxyfettsäuren sind:
9,10-Dihydroxypalmitinsäure, 9,10-Dihydroxystearinsäure und 13,14-Dihydroxybehensäure sowie deren 10,9- bzw. 14,13-Isomere.

Auch mehrfach ungesättigte Fettsäuren sind geeignet, z.B. Linolsäure und Linolensäure.
Als konkretes Beispiel für eine aromatische Carbonsäure sei die Zimtsäure genannt. Die Treib-Reaktion, d. h. die CO₂-Bildung für die Aufschäumung kann sowohl durch die Reaktion von Isocyanatgruppen des Polyisocyanats mit Wasser als auch durch die Reaktion der Isocyanatgruppen mit den Carbonsäuregruppen der Carbonsäuren erfolgen.

Wenn die CO₂-Abspaltung aus der Isocyanat-Carbonsäure-Reaktion bereits bei niedriger Temperatur starten soll, ist es zweckmäßig, Amino-substituierte Pyridine und/oder N-substituierte Imidazole als Katalysatoren mit zu verwenden. Besonders geeignet sind 1-Methylimidiazol, 2-Methyl-1-vinylimidazol, 1-Allylimidazol, 1-Phenylimidazol, 1,2,4,5-Tetramethylimidazol, 1 (3-Aminopropyl)imidazol, Pyrimidazol, 4-Dimethylamino-pyridin, 4-Pyrrolidinopyridin, 4-Morpholino-pyridin, 4-Methylpyridin und N-Dodecyl-2-Methyl-imidazol.

Die oben genannten Ausgangsstoffe für das PU-Bindemittel, nämlich Polyisocyanat, Polyol, Polyamin, Wasser, Carbonsäure und Katalysator werden in folgenden Mengenverhältnissen eingesetzt: Auf ein Äquivalent Isocyanat kommen 0,1 bis 1, vorzugsweise 0,8 bis 1 Äquivalente einer Mischung aus Polyol, Polyamin, Wasser und/oder Carbonsäure, wobei das Verhältnis Polyol und/oder Polyamin zu Wasser und/oder Carbonsäure 20 :1 bis 1 : 20 betragen kann. Die Menge an einzusetzenden Katalysatoren liegt zwischen 0,0001 und 1,0, vorzugsweise zwischen 0,01 und 0,5 äquivalenten Pyridin- oder Imidazolkatalysator. Wird dagegen nur Wasser zur Treibreaktion eingesetzt, kann auf die Zugabe der oben angegebenen Pyridine und Imidazole verzichtet werden. Ist jedoch Carbonsäure das alleinige Treibmittel, müssen diese Pyridine und/oder Imidazole in Kombination mit den später aufgeführten basischen oder metallorganischen Katalysatoren zur Reaktionsbeschleunigung eingesetzt werden. Setzt man Polycarbonsäuren oder Hydroxy- bzw. Aminocarbonsäuren ein, kann auf den Zusatz eines Polyols oder Polyamins ganz verzichtet werden. Für den Fall, daß kein Polyol, Polyamin oder Wasser an der Reaktion beteiligt ist, also die Isocyanate mit den Carbonsäuren umgesetzt werden, gilt die Regel: Auf ein Äquivalent Isocyanat kommen 0,1 bis 1, vorzugsweise 0,8 bis 1 äquivalente Carbonsäure und 0,0001 bis 1,0, vorzugsweise 0,001 bis 0,5 äquivalente Pyridin- oder Imidazolkatalysator.

Für den Fall, daß die mehrwertigen Isocyanate überwiegend mit Hydroxycarbonsäuren umgesetzt werden, sollen die o.g. Amin-Katalysatoren vorzugsweise in einer Konzentration von 0,05 bis 15, insbesondere von 0,5 bis 10 Gew.-% eingesetzt werden, bezogen auf die Summe von Hydroxycarbonsäure und Isocyanat.

Neben den obengenannten Pyridin- und Imidazol-Derivaten können noch weitere Katalysatoren zugesetzt werden. Insbesondere für die Isocyanat/Polyol- und Isocyanat/Wasser-Reaktion können metallorganische Verbindungen wie Zinn(II)salze von Carbonsäuren, starke Basen wie Alkali-Hydroxide, -Alkoholate und -Phenolate, z.B. Zinn-II-acetat, -ethylhexoat und -diethylhexoat verwendet werden. Eine bevorzugte Verbindungsklasse stellen die Dialkyl-Zinn(IV)-Carboxylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie insbesondere 2-Ethylhexan-, Capryl-, Caprin-, Laurin-, Myristin-, Palmitin- und Stearinsäure. Konkrete Verbindungen sind Dibutyl- und Dioctyl-zinndiacetat, -maleat, -bis-(2-ethylhexoat), -dilaurat, Tributylzinnacetat, Bis(β-methoxycarbonyl-ethyl)zinndilaurat und Bis(β-acetyl-ethyl)zinndilaurat.

Auch Zinnoxide und -sulfide sowie -thiolate sind bevorzugt brauchbar. Konkrete Verbindungen sind: Bis(tributylzinn)oxid, Bis(trioctylzinn)oxid, Dibutyl- und Dioctylzinnbis(2-ethyl-hexylthiolat) Dibutyl- und Dioctylzinndidodecylthiolat, Bis(β-methoxycarbonyl-ethyl)zinndidodecylthiolat, Bis(β-acetyl-ethyl)zinn-bis(2-ethylhexylthiolat), Dibutyl- und Dioctylzinndidodecylthiolat, Butyl- und Octylzinntris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl- und Octylzinntris(thioethylenglykol-2-ethylhexoat), Dibutyl- und Dioctylzinnbis(thioethylenglykol-2-ethylhexoat), Tributyl- und Trioctylzinn(thioethylenglykol-2-ethylhexoat) mit der allgemeinen Formel Rₙ₊₁ Sn(SCH₂CH₂OCOC₈H₁₇)₃₋ₙ, wobei R eine Alkylgruppe mit 4 bis 8 C-Atomen ist, Bis(β-methoxycarbonyl-ethyl)zinnbis(thioethylenglykol-2-ethylhexoat), Bis(β-methoxycarbonyl-ethyl)-zinnbis(thioglykolsäure-2-ethylhexoat), und Bis(β-acetyl-ethyl)zinn-bis(thioethy-lenglykol-2-ethylhexoat) und Bis(β-acetyl-ethyl)zinn-bis(thioglykolsäure-2-ethyl-hexoat.

Für die Vernetzung des Polyurethangerüstes kann auch die Trimerisierungsreaktion der Isocyanatgruppen mit sich selbst bzw. mit Urethan und Harnstoffgruppen zu Allophanat- bzw. Biuret-Gruppen erfolgen. Hierzu können Trimerisierungskatalysatoren verwendet werden. Als Trimerisierungs-Katalysator sei DABCO TMR-2 usw. der Fa. Air Products genannt, wobei es sich um in Ethylenglykol gelöste quaternäre Ammoniumsalze handelt.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl- und/oder Amino-Gruppen. Konkret genannt seien:
Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanohexylamin, Diethanolcyclohexylamin, Diethanolphenylamin sowie deren Ethoxylierungs- und
Propoxylierungs-Produkte, Diaza-bicyclo-octan(Dabco), Triethylamin, Dimethylbenzylamin (Desmorapid DB, BAYER), Bis-dimethylaminoethylether (Calalyst A l, UCC), Tetramethylguanidin, Bis-dimethylaminomethyl-phenol, 2,2'-Dimorpholinodiethylether, 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorborane, Texacat DP-914 (Texaco Chemical), N,N,N,N-Tetramethylbutan-1,3-diamin, N,N,N,N-Tetramethylpropan-1,3-diamin und N,N,N,N-Tetramethylhexan-1,6-diamin.

Die Katalysatoren können auch in oligomerisierter oder polymerisierter Form vorliegen, z.B. als N-methyliertes Polyethylenimin.

Die Polyurethan-Bindemittel der erfindungsgemäß hergestellten Formkörper haben neben den Amidgruppen aufgrund der Carbonsäure/Isocyanat-Reaktion noch UrethanGruppen aus der Reaktion der Isocyanate mit den Polyolen und/oder Polyhydroxycarbonsäuren. Außerdem enthalten sie Harnstoff-Gruppen aus der Reaktion der Isocyanate mit dem gegebenenfalls vorhandenen Wasser, den Polyaminen oder Aminocarbonsäuren des Systems. Sie enthalten außerdem noch Ester-Gruppen bzw. Ether-Gruppen aus den eingesetzten Polyolen.

Die Menge der Reaktionspartner Polyisocyanat, Polyol, Polyamin, Carbonsäure und Wasser wird so gewählt, daß das Polyisocyanat im Überschuß eingesetzt wird. Das Äquivalentverhältnis von NCO- zur Summe aus OH-, NH- und COOH-Gruppen beträgt 5:1, vorzugsweise 2:1 bis 1,2:1, ganz besonders bevorzugt ist ein Isocyanat-Überschuß von 5 bis 50 %.

Die nachdem erfindungsgemäßen Verfahren hergestellten Formkörper können dabei als Platten oder Halbzeuge mit 2 bis 40 mm Dicke hergestellt werden. Bei Anwendung von Preßdrucken im erfindungsgemäßen Bereich weisen die Platten und Formkörper Dichten auf, die nur 5 bis 10 % unter der Dichte des kompakten Materials liegen. Es wird beim Entspannen des Druckes eine Ausdehnung des Formkörpers beobachtet. Die Formkörper weisen eine glatte Oberfläche auf. Bei Prüfkörpern, die mit Kohäsionsbruch zerstört werden, zeigt sich bei mikroskopischer Untersuchung, daß die Formkörper dreidimensional mikroporös geschäumt sind und daß vielfach geschlossene Hohlräume vorliegen, die zum Teil wabenförmig sind. Diese mikroskopische Struktur ähnelt sogenannten "honey comb" Strukturen, und es wird vermutet, daß durch diese mikroskopische wabenförmige Struktur und Einbindung der Füllstoffteilchen in die Bindemittelmatrix sogar bei niedrigem Bindemittelgehalt hohe Festigkeiten und hohe Flexibilität der Platten bzw. Halbzeuge erzielt werden.

Aus diesem Grund eigenen sich die erfindungsgemäß hergestellten Formkörper zur Herstellung von Platten oder Halbzeugen für die Beschichtung von Möbeln, Küchenarbeitsplatten, Böden, Wänden, Treppen oder Decken.

Die nachfolgenden Beispiele sollen die Erfindung näher erläutern. Bei den Zusammensetzungen sind dabei alle Mengenangaben, Gewichtsteile, wenn nicht anders angegeben.

### Beispiele:

| a) Polyolkomponente | |
|---|---|
| Dipropylenglykol | 19,00 |
| Glycerin | 4,90 |
| Polypropylenglykol, Mn 400 | 51,00 |
| Rapsfettsäure | 24,16 |
| Tegostab B 8404 | 0,50 |
| Dibutylzinndilaurat | 0,04 |
| N-Methylimidazol | 0,40 |

| b) Isocyanatkomponente | |
|---|---|
| Diphenylmethan-4,4'-diisocyanat | 115.0 |

Zu Hartgummischnitzeln mit einer Länge bis zu 3 mm aus plattenförmigem Hartgummi (Vergleichsbeispiel1 ) und Quarzsand mit einem Feinsandanteil von ca. 30% (Partikeldurchmesser < 0,25 mm) und einem Partikel-Durchmesser bis zu 2,0 mm (Vergleichsbeispiel 2 und erfindungsgemäßes Beispiel) wurden 10,5 % Bindemittel gegeben. Dabei erfolgte die Vermischung mit den zwei Komponenten des Polyurethansystems in zwei Schritten. Hierbei war es gleichgültig, mit welcher Komponente man Hartgummischnitzel bzw. Quarzsand zuerst versetzte. Nach Überführung des jeweiligen Gemischs in eine mit Trennmittel imprägnierte Metallform wurde bei einem Preßdruck von 150 kp/cm² (15 MPa) und 80°C gepresst. Die Temperatur wurde dann 10 Minuten auf diesem Niveau gehalten. 5 bis 10 Minuten nach Abschalten der Heizung wurde die Presse geöffnet und die Platte der Form entnommen (Vergleichsbeispiel 1 und erfindungsgemäßes Beispiel).

Im Vergleichsbeispiel 2 wurde die gleiche Menge Quarzsand-Bindemittel-Gemisch des erfindungsgemäßen Beispiels in eine ebenfalls mit Trennmittel imprägnierte Form mit verschließbarem Deckel eingebracht und die Platte ohne zusätzlichen Druck ebenfalls bei 80°C hergestellt.

Diese 3 Platten hatten die Maße 1000 x 400 x 4 mm.

Die Prüfung der Platten erfolgte nach einer Woche Lagerung bei Raumtemperatur.
Dazu wurden die Platten auf Dreikantstäbe gelegt. Diese Stäbe lagen parallel auf einer waagerechten Fläche und hatten einen Abstand von 700 mm. Das Auflegen der Platten erfolgte so, daß sie gleichmäßig an jeder Seite 150 mm überstanden. In die Mitte der Steinverbundplatte wurde eine Stahlplatte von 400 x 80 x 5 mm so gelegt, daß sie parallel zu den Dreikantstäben lag und die Verbundplatte in der gesamten Breite bedeckte. Auf diese Metallplatte wurde mit einer Spindelpresse Druck ausgeübt und die Durchbiegung beim Bruch bestimmt.

| Platte | Durchbiegung bei Bruch in mm |
|---|---|
| Vergleichsbeispiel 1 | 12 |
| Vergleichsbeispiel 2 | 10 |
| erfindungsgemäßes Beispiel | 29 |

Dieser Biegetest erfolgte in ähnlicher Ausführung wie der 3-Punkt- bzw. 4-Punkt-Biegetest der DIN 53293, jedoch wurden die oben genannten Modifikationen angebracht, um aussagekräftige Ergebnisse für die erfindungsgemäß hergestellten Formkörper zu erreichen.

Aus dem Biegeversuch wird deutlich, daß nur die Platten nach erfindungsgemäßem Beispiel eine hohe Elastizität aufweisen, so daß sie gegen Biegebeanspruchung sehr resistent sind.

## Patentansprüche

1. Verfahren zum Herstellen von elastischen Formkörpern auf der Basis von Polyurethanbindemitteln, **dadurch gekennzeichnet, daß**
a) eine Bindemittel-Zusammensetzung, enthaltend Polyisocyanate, Polyole, langkettigen Fettsäuren, ggf. Wasser und Amine, mit Füllstoffen mit einem mittleren Teilchendurchmesser bis zu 2,5 mm durchmischt werden,
b) bei einem Druck von 1 MPa bis 40 MPa und Temperaturen von 60°C bis 180°C für 1 bis 30 min zur Reaktion gebracht werden,
c) und der Druck entspannt wird.

2. Verfahren zum Herstellen von elastischen Formkörpern nach Anspruch 1, **dadurch gekennzeichnet, daß** nach dem Entspannungsschritt c) das Reaktionsprodukt gekühlt wird und anschließend der formgebenden Vorrichtung entnommen wird.

3. Verfahren nach Anspruch 1 oder 2, **gekennzeichnet durch** ein Bindemittel zu Füllstoffverhältnis von 0,5:9,5 bis 5:5, vorzugsweise von 0,75 : 9,25 bis 2 : 8.

4. Verfahren nach Anspruch 1, 2 oder 3, **dadurch gekennzeichnet, daß** der Füllstoff einen Feinanteil von bis zu 50 Gew.-% mit einem mittleren Teilchendurchmesser von kleiner als 0,25 mm enthält.

5. Verfahren nach Anspruch 1 bis 4, **dadurch gekennzeichnet, daß** der Füllstoff einen Staubanteil - mittlerer Teilchendurchmesser kleiner als 0,1 mm - von bis zu 20 Gew.% enthält.

6. Verfahren nach Anspruch 1 bis 3 **dadurch gekennzeichnet, daß** die Teilchengeometrie der Füllstoffe runde, ovale oder völlig unregelmäßige Strukturen aufweist.

7. Verfahren nach mindestens einem der vorhergehenden Ansprüche, **dadurch gekennzeichnet, daß** der Füllstoff ausgewählt wird aus Gummimehl, Schaumstoffmehl, Holzmehl, zerkleinerten Nussschalen, insbesondere Kokosnussschalen, Metallpulver, zerkleinerten Kunststoffabfällen, zerkleinerten Muschelschalen, Sand und Kies, Steinmehl, Marmormehl, Glasmehl, Keramikmehl und Mischungen dieser Materialien.

8. Verfahren nach mindestens einem der vorhergehenden Ansprüche, **dadurch gekennzeichnet, daß** die Reaktion gemäß Schritt b) in geschlossenen Formen, Formen mit beweglichem Stempel, in Plattenpressen mit oder ohne Form oder in Band- oder Doppelbandpressen durchgeführt wird.

9. Verwendung der Formkörper hergestellt nach mindestens einem der vorhergehenden Ansprüche für Herstellung von Platten oder Halbzeugen für die Beschichtung von Möbeln, Küchenarbeitsplatten, Böden, Wänden, Treppen oder Decken.
